# EUROPEAN PATENT APPLICATION

(11) **EP 1 887 280 A1**
(43) Date of publication of application: **13.02.2008**
(21) Application number: 06254152.9
(22) Date of filing: 08.08.2006
(51) Int. Cl.: F21V 21/22, F21S 6/00

(54) **Locking assembly for telescopic support of an electrical appliance**

(71) Applicant: Herush Electrical (H.K.), Ltd., Hong Kong (CN)
(72) Inventor: Cheng, Ting Fun, Hong Kong (CN)
(74) Representative: Howe, Steven

(57) **Abstract**

There is provided a locking assembly (18) for a telescopic tubular support (12) having an outer tubular member (16) and an inner tubular member (14) slidably received in the outer tubular member (16), comprising a central connector (22) of generally cylindrical form for fixing to an inner tubular member (14) having an outer threaded region (32) and a region defining a frustoconical cam surface (34) and a locking sleeve (20) having an outer cylindrical surface for contacting an inner surface of an outer tubular member (16) and having an axial bore (26) formed therethrough which receives the central connector (22) and formed with at least one axial line of separation allowing radial expansion of the sleeve (20), the bore (26) having an internally threaded region threadably engaged with the outer threaded region (32) of the first member (22) and a frustoconical surface against which the cam surface of the first member (22) abuts, whereby relative rotation of the first member (22) within the sleeve (20) effects radial expansion.

## Description

### Field of the invention

The present invention relates to a locking assembly for a telescopic tubular support for an electrical appliance such as an electric heater or lamp and to appliance incorporating such a locking assembly.

### Background of the invention

Several types of electrical appliances are commonly required to be supported on a tall stand, such as lamps, fans and heaters. With such appliances it is generally desirable to be able to adjust height of the stand, and for this purpose the stand may be in the form of a telescopic-type support where an inner member is supported on and slidably received in a lower outer tubular member, with a locking arrangement provided therebetween. With such supports the issue arises as to how one carries the electrical cable up the support, either suspending it externally or concealing it within the support. Whilst a concealed cable is generally preferable for both aesthetic and safety reasons this leads to difficulties with the locking arrangement which can interfere with the cable leading to excessive snagging or twisting of the cable.

The present invention is directed to providing to a locking assembly for a tubular support which overcomes these drawbacks, and to appliances incorporating such a tubular support.

### Summary of the invention

According to the present invention there is provided a locking assembly for a telescopic tubular support having an outer tubular member and an inner tubular member slidably received in the outer tubular member, comprising a first member of generally cylindrical form for fixing to an inner tubular member having an outer threaded region and a region defining a frustoconical cam surface and a locking sleeve having an outer cylindrical surface for contacting an inner surface of an outer tubular member and defining an axial bore formed therethrough which receives said first member and formed with at least one axial line of separation allowing radial expansion of the sleeve, the bore having an Internally threaded region threadably engaged with the outer threaded region of the first member and a frustoconical surface against which the cam surface of the first member abuts, whereby relative rotation of the first member within the sleeve effects said radial expansion.

Such a structure provides simple compact coupling that allows locking and unlocking of the telescoping tubular support with limited relative turning of the Inner and outer tubes whilst providing a firm connection. The axial bore and first member may be readily configured such that about two or three complete revolutions of the first member relative to the sleeve are required in order to effect sufficient expansion for locking.

The locking sleeve is preferably formed of two shell halves movable away from each other to effect said radial expansion. The shell halves are formed with guide means to guide the separation of shell halves. The guide means comprise cooperating protrusions and recesses on opposing surfaces of the shell halves with biasing means provided between the shell halves urging the shell halves part to provide slight resistance when the inner tube is sliding relative to the outer tube. Each half shell may additionally be formed with an axial line of separation defining two shell segments joined by a thin bridge, whereby the shell segments can move radially relative to each other.

In the preferred embodiment of the locking assembly the first member is formed with a pair of frustoconical cam surfaces facing in opposite directions to each other and with the threaded region therebetween, and the locking sleeve has a pair of corresponding frustoconical surfaces, whereby radial expansion can be effected by rotating in either a clockwise or anticlockwise sense.

The locking assembly finds applicability in a variety of appliances, but is particularly appropriate for electrical appliances where an electrical cable extends Internally up the support.

In another aspect, the present invention provides an electric heater comprising an operable part supported on a tubular support which comprise telescopically disposed tubular members, wherein provided between the tubular members is a locking assembly as described above. The operable part is supported on one end of an Inner tubular member, and the first member of the locking assembly is supported on the opposite end received with the outer tubular member. An electrical cable extends along the length of the tubular support passing through the axial bore extending through the locking assembly. Preferably, the electrical cable is wound into a helical coil within the outer tubular member.

The locking assembly is particularly advantageous in the application of an electric heater of a type commonly referred to as a patio heater.

### Brief description of the drawings

The invention will now be described, by way of example only, with reference to the following drawings, in which:
Figure 1 is a schematic Internal side view of an electric appliance which is a patio heater with a telescopic tubular support incorporating a locking assembly in accordance with an embodiment of the present invention, in an extended position;
Figure 1a is a sectional side view of a heat lamp electrical connector assembly;
Figure 1b is a sectional view of a locking assembly shown inside the tubular support In a first lock position;
Figure 1c is a sectional view of a locking assembly shown inside a tube in a second lock position;
Figure 2 is a schematic internal side view of the patio heater as shown in Figure 1 with the telescopic tubular support in a retracted position and with the heat lamp assembly detached;
Figure 2a is a sectional side view of a male electrical connector shown with a partial view of the heat lamp assembly;
Figure 2b is a sectional side view of a female electrical connector;
Figure 3 is a perspective view of a locking assembly for a telescopic tubular support made in accordance with a preferred embodiment of the present invention;
Figure 4 is a side view of a connector of the locking assembly;
Figure 5 is a sectional view of the connector shown in Figure 4 taken along line A-A in Figure 4;
Figure 6 is a sectional view of an electrical connector assembly in a detached condition;
Figure 7 is a side view of a female electrical connector;
Figure 8 is a top view of the female electrical connector shown in Figure 7;
Figure 9 is a bottom view of the female electrical connector shown in Figure 7;
Figure 10 is a close-up partial top view of a grounding bore of the female electrical connector shown in Figure 9;
Figure 11 is a sectional view of the female electrical connector taken along line A-A of Figure 8; and
Figure 12 is a sectional view of the female electrical connector taken along line B-B of Figure 8.

### Detailed description of the invention

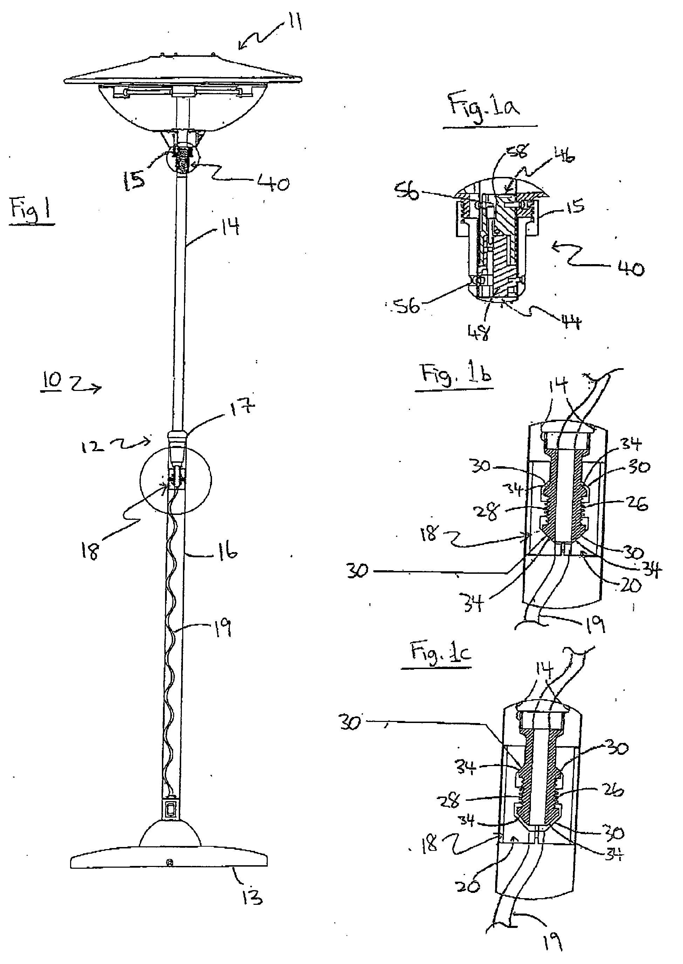

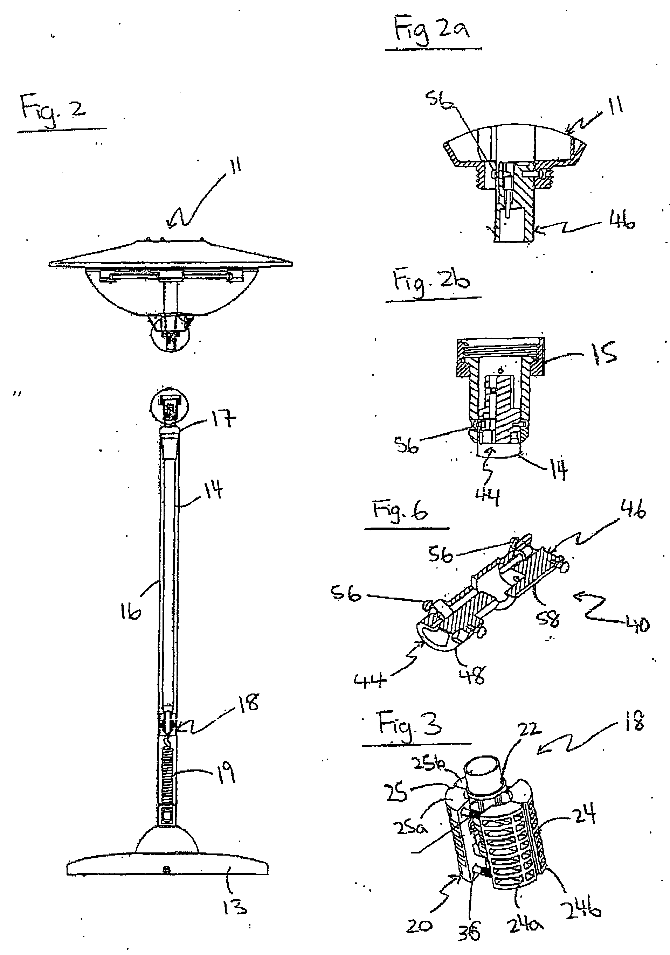

Referring to Figures 1 and 2, illustrated therein is a sectional side view of a freestanding height adjustable electrical powered heater 10 of a type commonly known as a patio heater in that it is particularly useful for providing space heating in an outdoor environment such as a garden or on a patio. The patio heater 10 include a heat lamp assembly 11, a base 13 and a telescopic tubular support 12 which provides structural support between the heat lamp 11 and the base 13 and provides for the adjustment of the height of the patio heater 10. The heat lamp assembly 11 typically utilizes an Incandescent bulb, or infrared bulb as the heating element. These bulbs use specialized filaments (such as quartz) optimized to give most of its energy in the infrared portion of the spectrum rather than the visible light portion to provide as much radiant heat as possible. The fixture for the bulb is usually ceramic so as to withstand high temperatures and the shroud or hood is generally made of metal. There may be a wire guard over the front of the shroud, to prevent people from touching the heating element.

It will be appreciated however that the invention has broader applicability and can be used in a variety of appliances where an operable part is supported on a telescopic support, such as lamps or fans.

The heat lamp assembly 11 of the patio heater is attached to the tubular support 12 through a collar 15 at the top of the tubular support 12. The heat lamp assembly 11 is removable from the tubular support 12 which is useful for packaging, storage or maintenance. The base 13 is similarly removable from the telescopic tubular support 12 for similar reasons. However, when the patio heater is assembled, the base 13 is rigidly attached to the telescopic tubular support 12 and provides solid support for the telescopic tubular support 12 and heat lamp assembly 11. Electrical wires 19 that supply electricity to the heat lamp extend through the telescopic tubular support 12 to the base 13, and from there to a source of mains electrical supply. In the outer tubular support 16 the wire is wound in a helical form, whilst in the inner tubular support 14 the wire may extend in a simple straight line. There is a switch located on the base 13 for turning the patio heater 10 on and off.

The telescopic tubular support 12 comprises a pair of elongate tubes including, a lower outer tube 16, and an upper inner tube 14 receivable within the outer tube 16. The inner tube 14 is preferably axially aligned with the outer tube 16 and has a diameter that allows inner tube 14 to slidably fit inside outer tube 16. The inner and outer tubes are preferably made of thin metal. Fitted on the upper end of the outer tube 16 is a collar 17 which has an upper end formed with a downwardly facing annular recess which receives the upper edge of the outer tube 16, and tapers downwardly to a smaller diameter opening dimensioned to receive the Inner tube 14 with a snug but not tight fit. The locking assembly 18 is connected to the lower end of the inner tube 14 and rests inside the outer tube 16 In a manner as discussed further below.

Figure 1 shows the telescopic tubular support 12 in an extended position with the locking assembly 18 near the top of outer tube 16 while Figure 2 shows the telescopic tubular support 12 in a retracted position with most of the inner tube 14 inserted into the outer tube 16 with the locking assembly 18 near the bottom of the outer tube 16. As illustrated by Figures 1 and 2, the telescopic tubular support 12 provides for the adjustment of the height of the patio heater 10 as required for use in different settings. It will be noted that the electric wire 19 which in the outer tube 16 is coiled into a helix will readily accommodate the elongation required in the extended position.

Figures 1b, 1c, and 3 to 5, illustrate the locking assembly 18 of the telescopic tubular support 12 in further detail. The locking assembly 18 comprises an outer locking sleeve 20 in the form of a shell assembly and an inner member of generally cylindrical form referred to as a connector 22. The parts of the locking assembly 18 are preferably made from moulded plastics, for ease of manufacture, and in the case of the locking sleeve, a plastics material affords slight resilience which is useful as part of the locking function as discussed below. The connector 22 is fixed at its upper end to the bottom end of inner tube 14 by a cylindrical cup-shaped end 23 thereof which fits within the inner tube 14 and is secured together by a fastener.

The locking sleeve 20 preferably comprises two opposed shell parts 24, 25 separated along a vertical plane through the tube axis, however in other variations the shell assembly 20 may comprise more than two shell parts. Each shell part 24, 25 also preferably Comprise a split structure with deep splits extending vertically from the top and bottom with a narrow bridge region therebetween, defining shell sub-parts 24a, 24b, 25a, and 25b. This allows slight flexing of one shell sub-part relative to the other.

As shown more clearly in Figures 1b and 1c, the shell parts 24 of the locking sleeve 20 internally define a central threaded bore region 26 and frustoconical chambers 30 at the opposite end of the threaded bore 26. In the preferred embodiment of the present invention, there are two oppositely directed frustoconical chambers 30 one at each respective end of the threaded bore 26. The shell parts 24 are shaped to define apertures at the ends of the frustoconical chambers 30 to accommodate at the upper end the connector 22 and at the lower end electrical wires 19 which extend therethrough.

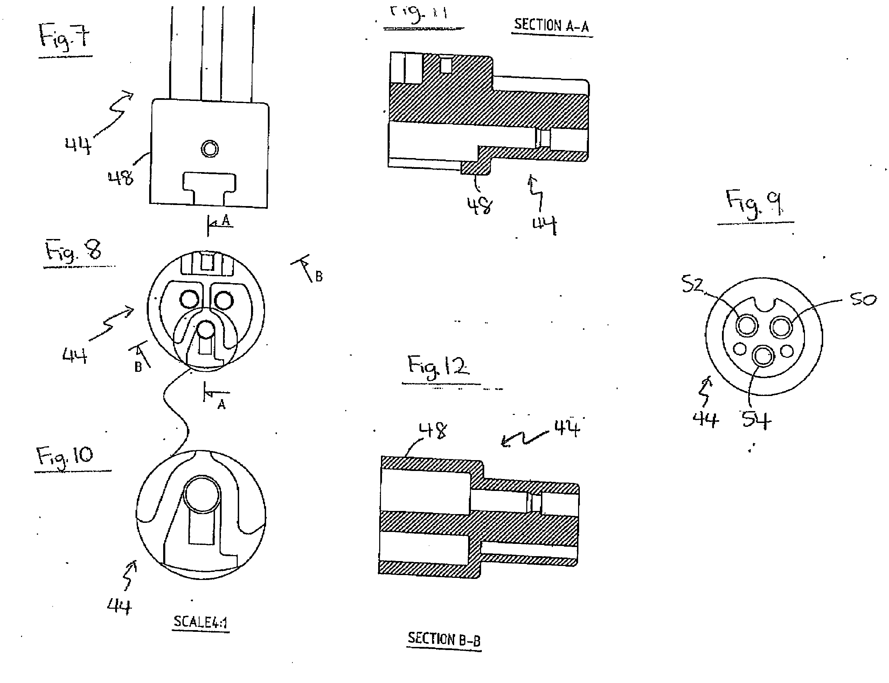

Illustrated in Figures 4 and 5 is the connector 22. The connector 22 has a central externally threaded region 32 threadably engageable with the threaded bore 26 of the locking sleeve 20 and a pair of frustoconical surfaces 34 that fit within the frustoconical chambers 30 of the shell assembly 20. In the preferred embodiment of the present invention, the connector 22 posses two oppositely directed frustoconical surfaces 34 one at each respective ends of the threaded region 32 to fit within the respective frustoconical chambers 30 of the locking sleeve 20. The connector 22 further comprises a narrow neck region 31 with reinforcing ribs 33 which connects to the threaded region 32 and to the cup-shaped end 23. In addition, the connector 22 comprises an axial bore 36 for accommodating electrical wires 19 which extend through the locking assembly 18, as seen in Figure 5. The wire 19 will preferably be fixed within the connector 22, so that the limited twisting is taken up only in the lower region which is found in the helix.

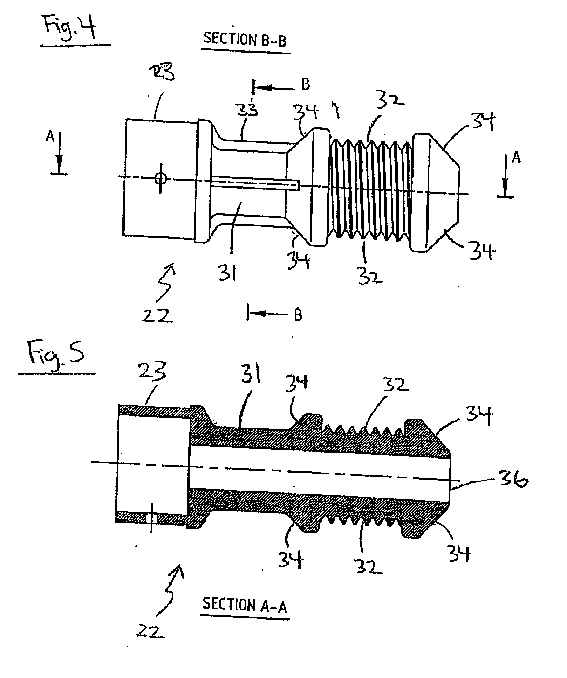

As shown in Figures 1a, 1b, and 3, the frustoconical surfaces 34. and threaded region 32 of the connector 22 fit in the locking sleeve 20 together forming the locking assembly 18. As noted, the connector 22 is fixed to the lower end of the upper inner tube 14. As this tube 14 is rotated, the connector 22 moves axially along the threaded bore 26. The locking assembly 18 thus fixes the position of the inner tube 14 within the outer tube 16 to form the telescopic tubular support 12.

To achieve the radial separation of the shell parts 24 and thus fixing the position of the locking assembly 18, the connector 22 is rotated until, depending on the sense of rotation, one of the frustoconical surface 34 of the connector 22, which constitutes a cam surface, pushes against the interior frustoconical surface of the frustoconical chamber 30 urging the shell parts 24 to separate radially, forcing them tightly against the inside of the outer tube 16 and preventing relative axial movement between the inner tube 14 and outer tube 16. Since In the preferred embodiment, there are two oppositely directed frustoconical chambers 30, one at each end of the threaded bore 26, and two frustoconical surfaces 34 to engage each respective frustoconical chambers 30, the separation of the shell parts 24 can be achieved by both clockwise and counterclockwise rotation of the connector 22 as illustrated in Figures 6 and 7.

When the connector 22 is positioned in the threaded bore 26 such that neither of the frustoconical surfaces 34 are exerting pressure on the surface of the frustoconical chambers 30 then the locking assembly 18 is free to slidably move inside the outer tube 16 thus allowing for the adjustment of the length of the telescoping tubular support 12. Once the desired position is found, the length of the telescopic tubular support 12 can be fixed by rotating the inner tube 14 thereby fixing the position of the locking assembly 18 against the inner surface of the outer tube 16 as described above.

The locking sleeve 20 further comprises guide means 36 for aligning the shell parts 24. The guide means 36 preferably comprise cooperating protrusions and recesses on opposing surfaces of the shell halves 24 and 25. Preferably biasing means 38 such as springs are added to guide means 36 to push the shell parts away from each other putting light pressure against the inner surface of the outer tube 16 thus providing some resistance to the axial movement of the locking assembly 18 as it slides along the inner surface of the outer tube 16.

The spacing between the inclined surfaces of the frustoconical chambers 30 and the frustoconical surfaces 34 of the connector 22 and the screw pitch of the threaded regions are carefully selected such that only a small number of turns is required between the unlocked position and locked position, for example, two to three turns of the upper tube 14 relative to the lower tube 16. This is important since it ensures that the electrical wire 19 is likewise twisted only by the same number of turns minimizing its disruption within the lower tube 16, as well as providing ease and convenience of locking/unlocking for the user.

In an alternative embodiment of the present invention (not shown), the connector 22 posses only one frustoconical surface 34 at one end of the threaded bore 26 to fit within one respective frustoconical chamber 30 of the shell assembly 20. In this embodiment, the connector 22 can only be rotated in one direction to fix the position of the locking assembly 18 since there is only one frustoconical chamber 30 and one frustoconical end 34. To fix the position of the lock assembly 18, the connector 22 is rotated in one direction until it pushes against the interior surface of the frustoconicai chamber 30 urging the shell parts 24 to separate radially. In the same manner, to unfix the position of the lock assembly, the connector 22 is rotated in the opposite direction to release the pressure against the interior surface of the frustoconical chamber 30.

Figures 8 to 14 illustrate the heat lamp's electrical connector assembly 40 and its parts. The electrical connector assembly 40 comprises a female electrical connector 44 which is received at the top of the inner tube 14 and a male electrical connector 46 connected to the heating lamp assembly 11. The female electrical connector 44 comprises a housing 48, the housing 48 having a first bore with a metal sleeve 50 for providing a first female electrical contact, a second bore with a metal sleeve 52 for providing a second female electrical contact and a ground bore with a metal sleeve 54 for providing a female ground contact. As better viewed in Figures 7 to 12, the bores are isolated from each other. The female electrical connector 44 further comprises the feature of providing an exterior ground contact 56 exposed on the housing of the female electrical connector 44. The exterior ground contact 56 is electrically connected to the metal sleeve of the ground bore 54.

The male electrical connector 46 comprises a housing 58 which slidably engages the protruding housing 48 of the female electrical connector 44, the housing 58 comprising a first cavity 60, a second cavity 62 and a ground cavity 64 wherein the cavities are Isolated from each other. The first cavity 60 houses a first male electrical pin 66 and the second cavity 62 houses a second male electrical pin 68 protruding therein and the ground cavity 70 houses a male ground pin 72 protruding from therein. The male electrical connector 46 also further comprises the feature of providing an exterior ground contact 56 exposed on the housing 58 of the male electrical connector 46. The exterior ground contact 56 is electrically connected to the male ground pin 72.

When the housing 46 of the male electrical connector 46 slidably engages the housing 48 female electrical connector 44 the respective male electrical pins are engaged with the metal sleeves of the female electrical contacts to provide an electrical connection between the wires 19 running from the base and the telescopic tubular support 12 and the heat lamp 11. The electrical connector assembly 40 thus allows the heat lamp assembly 11 to be detached from the top of the tubular support assembly 12.

It should be apparent to one skilled in the art that various modifications can be made to the embodiments disclosed herein, without departure from the invention, the scope of which is defined in the appended claims.

## Claims

1. A locking assembly for a telescopic tubular support having an outer tubular member and an inner tubular member slidably received in the outer tubular member, comprising:
a first member of generally cylindrical form for fixing to an inner tubular member having an outer threaded region and a region defining a frustoconical cam surface; and
a locking sleeve having an outer cylindrical surface for contacting an inner surface of an outer tubular member and defining an axial bore formed therethrough which receives said first member and which is formed with at least one axial line of separation allowing radial expansion of the sleeve, the bore having an internally threaded region threadably engaged with the outer threaded region of the first member and a frustoconical surface against which the cam surface of the first member abuts, whereby relative rotation of the first member within the sleeve effects said radial expansion.

2. A locking assembly according to claim 1, wherein the locking sleeve is formed of two shell halves movable away from each other to effect said radial expansion.

3. A locking assembly according to claim 2, wherein the shell halves are formed with guide means to guide the separation of shell halves.

4. A locking assembly according to claim 3, wherein the guide means comprise cooperating protrusions and recesses on opposing surfaces of the shell halves.

5. A locking assembly according to any one of claims 2 to 4, wherein biasing means are provided between the shell halves urging the shell halves apart.

6. A locking assembly according to any one of claims 2 to 5, wherein each half shell is additionally formed with an axial line of separation defining for each half shell two shell segments joined by a thin bridge, whereby the shell segments can move radially relative to each other.

7. A locking assembly according to any preceding claim, wherein the axial bore and first member are configured such that about two or three complete revolutions of the first member relative to the sleeve are required in order to effect sufficient expansion for locking.

8. A locking assembly according to any preceding claim wherein the frustoconical surface of the locking sleeve sits in a chamber of greater axial dimension than the cooperating portion of the first member.

9. A locking assembly according to any preceding claim, wherein the first member Is formed with a pair of frustoconical cam surfaces facing in opposite directions to each other and with the threaded region therebetween, and the locking sleeve has a pair of corresponding frustoconical surfaces, whereby radial expansion can be effected by rotating in either a clockwise or anticlockwise sense.

10. An electrical appliance comprising an operable part supported on a tubular support which comprise telescopically disposed tubular members, wherein provided between the tubular members is a locking assembly according to any preceding claim.

11. An electrical appliance according to claim 10 wherein the operable part is supported on one end of an inner tubular member, and the first member of the locking assembly is supported on the opposite end received with the outer tubular member.

12. An electrical appliance according to claim 10 or 11 wherein an electrical cable extends along the length of the tubular support passing through the axial bore extending through the locking assembly.

13. An electrical appliance according to claim 12, wherein the electrical cable is wound into a helical coil within the outer tubular member.

14. An electrical appliance according to any one of claims 10 to 13, wherein the electrical appliance is in the form of a patio heater.
